# EUROPEAN PATENT SPECIFICATION

(11) **EP 4 112 463 B1**
(45) Date of publication and mention of the grant of the patent: **12.03.2025**
(21) Application number: 21181983.4
(22) Date of filing: 28.06.2021
(51) Int. Cl.: B64D 11/04, A21B 3/04, A47J 37/00, F24C 15/00, F24C 15/20, B64D 13/06

(54) **OVEN WITH AIR QUALITY SENSOR**
OFEN MIT LUFTQUALITÄTSSENSOR
FOUR COMPRENANT UN CAPTEUR DE QUALITÉ DE L'AIR

(43) Date of publication of application: 04.01.2023
(73) Proprietor: B/E Aerospace, Inc., Winston Salem, NC 27105 (US)
(72) Inventor: HUIJSING, Hans, Nieuwegein (NL); PEREZ CAMACHO, Manuel, Nieuwegein (NL)
(74) Representative: Dehns

(56) References cited:
- US-A1- 2010 224 616
- US-A1- 2017 292 713
- US-B1- 10 295 457

## Description

### TECHNICAL FIELD

The present disclosure relates to an oven with one or more air quality sensors.

### BACKGROUND

Ovens are used on aircraft to heat/cook meals to distribute to passengers travelling to their intended destination. Various detectors in an aircraft cabin determine if there is smoke present in the air. However, these smoke detectors do not assess the air quality of the aircraft for a prediction of an emergency event.

The present disclosure provides a solution for this need.

US 2017/292713 discloses an oven appliance capable of humidity control using a sensor and cooling fan. US 10 295 457 discloses an airplane cabin air quality sensor comprising a gas monitor.

### SUMMARY OF THE INVENTION

There is provided an aircraft comprising an oven and a cabin according to claim 1.

The at least one sensor may be configured to detect at least one of the following gasses: ethane, isoprene, 2-methyl-1,3 butadiene, ethanol, acetone and carbon monoxide.

The at least one sensor may be configured to detect at least one of air pressure, a temperature of the air and a humidity of the air.

The oven may further comprise a human-machine interface. The at least one sensor may be configured to send a signal to the human-machine interface to display a hazardous event.

The at least one sensor may be located in an outer cavity of the oven.

There is also provided a method. The method includes providing an aircraft comprising an oven and a cabin according to claim 6.

The at least one sensor may detect at least one of the following gasses: ethane, isoprene, 2-methyl-1,3 butadiene, ethanol, acetone and carbon monoxide.

The at least one sensor may detect at least one of air pressure, a temperature of the air and humidity of the air.

The at least one sensor may send a signal to a human-machine interface of the oven to display a hazardous event.

The at least one sensor may send a signal to an aircraft galley network in order to alert of a hazardous event.

### BRIEF DESCRIPTION OF THE DRAWINGS

Figure 1a shows a sketch of the main modules of an oven.
Figure 1b shows a flow representation of the oven of Figure 1a.
Figure 1c shows a 3D view of the top of an oven example with part of the outer shell removed.
Figure 1d shows a top view of an oven with part of the outer shell removed.
Figure 2a shows a position of a gas composition sensor.
Figure 2b shows an additional, or alternative, position of a gas composition sensor.

### DETAILED DESCRIPTION

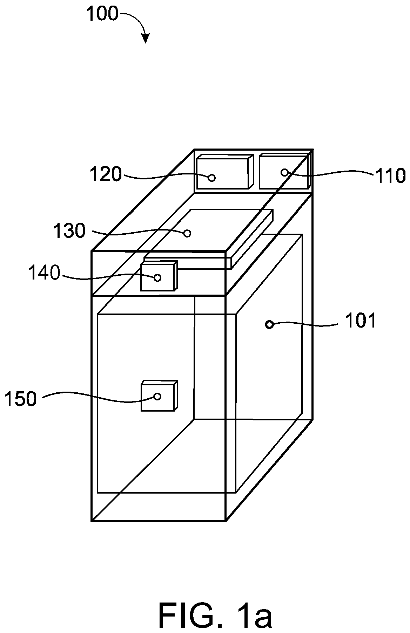

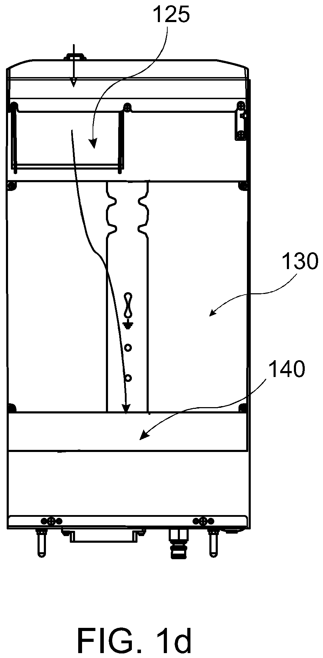

With reference to Figure 1a, there is shown an oven 100. The oven 100 includes an air inlet 120 and a cooling fan 140, and may include a human-machine interface 110 (hereinafter HMI), an oven control unit 130 (hereinafter OCU), an inner cavity 101 and motor 150.

The HMI 110 allows a user to input controls to the oven 100; for example, cooking time, temperature settings, type of meal etc. The HMI 110 also informs the cabin crew over the oven status The air inlet 120 allows for cabin air to pass through from the cabin (not shown) into the oven 100. The OCU 130 communicates with the HMI in order to control the functions of the oven 100 and display relevant information about the oven; for example, setting the cooking time and temperature, etc.

The cooling fan 140 shown in Figure 1a is configured to draw air in from the cabin and through the air inlet 120 to the outer cavity (not shown in Figure 1a).

Therefore, the cooling fan 140 is drawing in cabin air in order to pass over the OCU 130 such that the OCU 130 remains cool during operation.

The inner cavity 101 is an area in the oven that heats/cooks one or more meals that are introduced into the inner cavity 101 during use. The motor 150 may operate an oven fan (not shown in Figure 1a) that circulates hot air in the inner cavity 101 to heat/cook the meals that are provided in the inner cavity 101 during use.

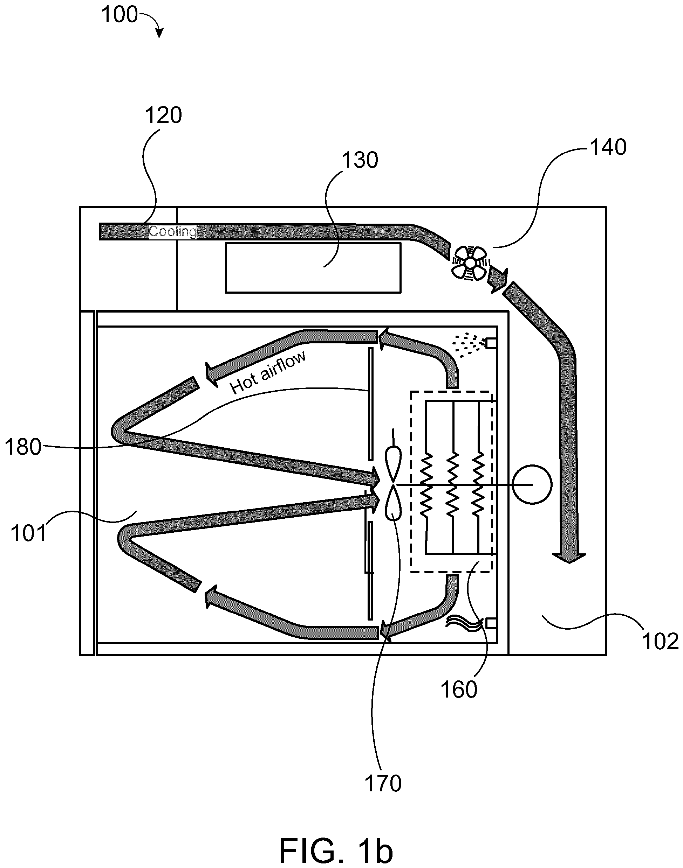

Figure 1b shows a flow representation of the oven 100 of Figure 1a. As can be seen in Figure 1b, the oven 100 may include the inner cavity 101 and an outer cavity 102. The air inlet 120, HMI 110, OCU 130, cooling fan 140 and motor 150 may all be present in the outer cavity 102. The inner cavity may include at least one heating element 160, an oven fan 170 and one or more baffle plates 180.

As shown in Figure 1b, the cooling fan 140 draws cooling air from the aircraft cabin through the air inlet 120. The flow of air moves across the OCU 130 in order to cool the OCU 130 during operation. Therefore, the cooling air moving through the outer cavity prevents crucial components from overheating during use.

As mentioned above, the inner cavity 101 may include at least one heating element 160 that heats the air surrounding the at least one heating element 160 in the interior of the inner cavity 101. The motor 150 is connected to the oven fan 170 in order to rotate the oven fan 170 such that hot air can be circumvented within the inner cavity 101. The oven fan 170, as an example, can draw the hot air around the one or more baffle plate 180 such that there is uniform heating in the interior of the inner cavity 101. This therefore allows for uniform cooking/heating of the passenger meals.

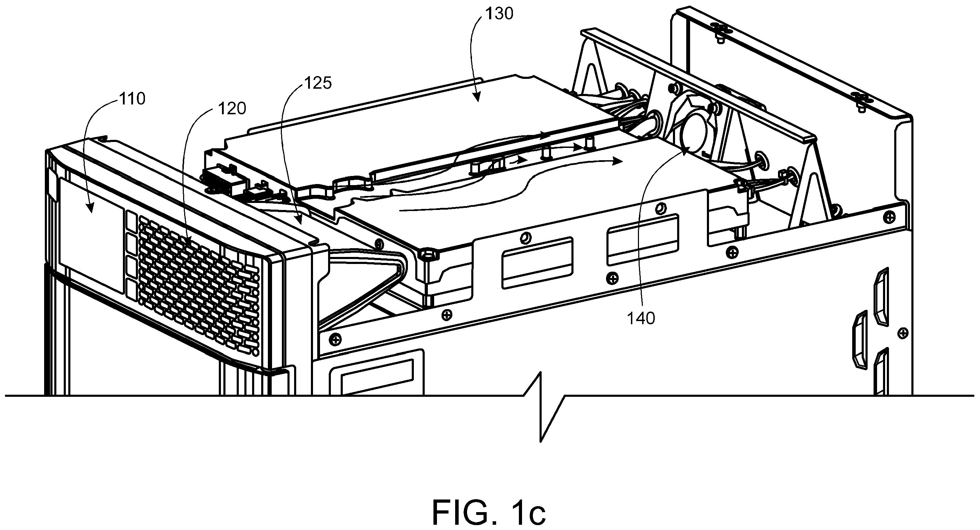

Figure 1c shows a schematic view of the top of the oven 100 with a part of a shell of the outer cavity removed. As shown in this Figure, there may be provided a dust filter 125 between the air inlet 120 and the OCU 130. The dust filter 125 allows for particles from the cabin air to be removed after passing through the air inlet 120. Therefore, the dust filter 125 ensures that the subsequent air passing over the OCU 130 is free from particles from the cabin.

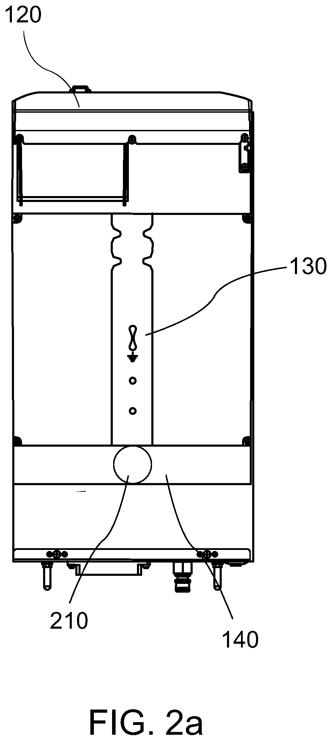

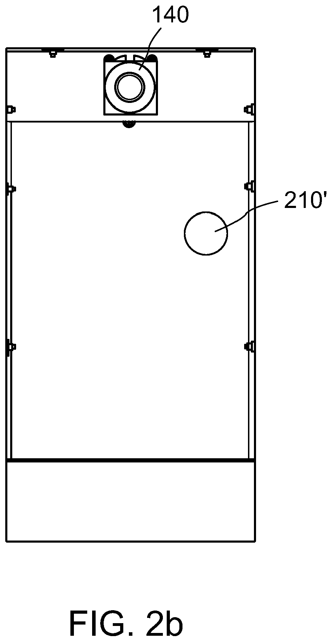

In order to determine if an air flow, for example the air drawn in from the air inlet 120 by the cooling fan 140, includes hazardous gas, a sensor 210 or 210' (shown in Figures 2a and 2b) is provided in or on the oven. The sensors 210 or 210' may be configured to detect, as an example, ethane, isoprene, 2-methyl-1,3 butadiene, ethanol, acetone, carbon monoxide and other hazardous gas compositions. The sensors 210 and 210' may also be configured to determine air quality, pressure, humidity and temperature of the air drawn in from the air inlet. In both Figures 2a and 2b, the sensors 210, 210' are provided downstream of the inlet air flow drawn in from the air inlet 120 by the cooling fan 140. Of course, it is envisaged that the sensors 210. 210' may be provided downstream of any air flow that includes potential sources of dangerous gases.

As an example shown in Figure 2a, the position of the sensor 210 is provided in the outer cavity of the oven downstream of the air inlet 120 and the OCU 130, and is located adjacent to the cooling fan 140. The sensor 210 is configured to monitor the inlet air flow and to determine if hazardous gases are present.

As an example shown in Figure 2b, the sensor 210' is located in the outer cavity of the oven downstream of the cooling fan 140. Therefore, the sensor 210' is configured to monitor the inlet air flow after passing the cooling fan 140 to determine if there are hazardous gases present.

The sensors 210 and 210' are shown in example locations in Figures 2a and 2b.

However, it is envisaged that any suitable location of the sensors 210 and 210' may be configured such that they are positioned to detect potentially hazardous gasses in any air flow within, or around, the oven. The invention is not restricted to these locations and it is to be understood that the sensors 210 and 210' could be placed in, on, or around, the oven in order to detect hazardous gas in an air flow.

The sensors 210 and 210' may both be present in the oven. Alternatively, one of the sensors 210 and 210' may be provided in the oven. Of course, further gas composition sensors may also be included in the system to determine hazardous gases in an air flow, for example to allow detection of potentially hazardous gasses generated by other galley equipment.

The sensors 210 and 210' allow for the oven to determine if there are hazardous gasses present in the air flow, which could signify that there is an emergency event in the cabin. The sensors 210 and 210' may then alert the cabin crew or flight deck of a potentially dangerous event occurring in the cabin whenever the threshold limit of one or more of the hazardous gasses is crossed. The sensors 210 and 210', for example, could be connected to the OCU 130, and the OCU 130 may be connected to the aircraft galley network and/or other aircraft inserts. The warning message could be displayed in the HMI of the oven and/or communicated to the aircraft and/or other inserts.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. An aircraft comprising:
a cabin;
an aircraft galley, the aircraft galley comprising an aircraft galley network;
an oven, said oven being situated in the aircraft galley, the oven comprising:
an air inlet (120);
a cooling fan (140) configured to draw air from the cabin through said air inlet (120) to generate an air flow;
at least one sensor (210, 210') provided downstream of the air inlet, said at least one sensor (210, 210') configured to determine a gas composition of the air flow, wherein the at least one sensor (210, 210') is configured to send a signal to the aircraft galley network in order to alert of a hazardous event.

2. The aircraft of any preceding claim, wherein the at least one sensor (210, 210') is configured to detect at least one of ethane, isoprene, 2-methyl-1,3 butadiene, ethanol, acetone and carbon monoxide.

3. The aircraft of any preceding claim, wherein the at least one sensor (210, 210') is configured to detect at least one of air pressure, a temperature of the air and a humidity of the air.

4. The aircraft of any preceding claim, wherein the oven further comprises:
a human-machine interface (110);
wherein the at least one sensor (210, 210') is configured to send a signal to the human-machine interface (110) to display a hazardous event.

5. The aircraft of any preceding claim, wherein the at least one sensor (210, 210') is located in an outer cavity of the oven.

6. A method comprising:
providing an oven in an aircraft, the aircraft comprising a cabin and an aircraft galley, the aircraft galley comprising an aircraft galley network and wherein said oven is situated in the aircraft galley, and wherein the oven comprises:
an air inlet (120);
a cooling fan (140) configured to draw air from the cabin through said air inlet (120) to generate an air flow; and
at least one sensor (210, 210') provided downstream of the air inlet, and wherein said at least one sensor (210, 210') determines a gas composition of the air flow, wherein the at least one sensor (210, 210') is configured to send a signal to the aircraft galley network in order to alert of a hazardous event.

7. The method of claim 6, wherein the at least one sensor (210, 210') detects at least one of ethane, isoprene, 2-methyl-1,3 butadiene, ethanol, acetone and carbon monoxide.

8. The method of claims 6 or 7, wherein the at least one sensor (210, 210') detects at least one of air pressure, a temperature of the air and a humidity of the air.

9. The method of any of claims 6-8, wherein the at least one sensor (210, 210') sends a signal to a human-machine interface (110) of the oven to display a hazardous event.

10. The method of any of claims 6-9, wherein the at least one sensor (210, 210') sends a signal to an aircraft galley network in order to alert of a hazardous event.

## Patentansprüche

1. Flugzeug, umfassend:
eine Kabine;
eine Flugzeugküche, wobei die Flugzeugküche ein Flugzeugküchennetzwerk umfasst;
einen Ofen, wobei sich der Ofen in der Flugzeugküche befindet, wobei der Ofen Folgendes umfasst:
einen Lufteinlass (120);
einen Kühlventilator (140), der dazu konfiguriert ist, Luft aus der Kabine durch den Lufteinlass (120) anzusaugen, um einen Luftstrom zu erzeugen;
mindestens einen Sensor (210, 210'), der stromabwärts des Lufteinlasses bereitgestellt ist, wobei der mindestens eine Sensor (210, 210') dazu konfiguriert ist, eine Gaszusammensetzung des Luftstroms zu bestimmen, wobei der mindestens eine Sensor (210, 210') dazu konfiguriert ist, ein Signal an das Flugzeugküchennetzwerk zu senden, um vor einem gefährlichen Ereignis zu warnen.

2. Flugzeug nach einem der vorhergehenden Ansprüche, wobei der mindestens eine Sensor (210, 210') dazu konfiguriert ist, mindestens eines von Ethan, Isopren, 2-Methyl-1,3-Butadien, Ethanol, Aceton und Kohlenmonoxid zu erfassen.

3. Flugzeug nach einem der vorhergehenden Ansprüche, wobei der mindestens eine Sensor (210, 210') dazu konfiguriert ist, mindestens eines von Luftdruck, einer Temperatur der Luft und einer Feuchtigkeit der Luft zu erfassen.

4. Flugzeug nach einem der vorstehenden Ansprüche, wobei der Ofen ferner Folgendes umfasst:
eine Mensch-Maschine-Schnittstelle (110);
wobei der mindestens eine Sensor (210, 210') dazu konfiguriert ist, ein Signal an die Mensch-Maschine-Schnittstelle (110) zu senden, um ein gefährliches Ereignis anzuzeigen.

5. Flugzeug nach einem der vorhergehenden Ansprüche, wobei sich der mindestens eine Sensor (210, 210') in einem äußeren Hohlraum des Ofens befindet.

6. Verfahren, umfassend:
Bereitstellen eines Ofens in einem Flugzeug, wobei das Flugzeug eine Kabine und eine Flugzeugküche umfasst, wobei die Flugzeugküche ein Flugzeugküchennetzwerk umfasst und wobei sich der Ofen in der Flugzeugküche befindet, und wobei der Ofen Folgendes umfasst:
einen Lufteinlass (120);
einen Kühlventilator (140), der dazu konfiguriert ist, Luft aus der Kabine durch den Lufteinlass (120) anzusaugen, um einen Luftstrom zu erzeugen; und
mindestens einen Sensor (210, 210'), der stromabwärts des Lufteinlasses bereitgestellt ist, und wobei der mindestens eine Sensor (210, 210') eine Gaszusammensetzung des Luftstroms bestimmt, wobei der mindestens eine Sensor (210, 210') dazu konfiguriert ist, ein Signal an das Flugzeugküchennetzwerk zu senden, um vor einem gefährlichen Ereignis zu warnen.

7. Verfahren nach Anspruch 6, wobei der mindestens eine Sensor (210, 210') mindestens eines von Ethan, Isopren, 2-Methyl-1,3-Butadien, Ethanol, Aceton und Kohlenmonoxid erfasst.

8. Verfahren nach Anspruch 6 oder 7, wobei der mindestens eine Sensor (210, 210') mindestens eines von Luftdruck, einer Temperatur der Luft und einer Feuchtigkeit der Luft erfasst.

9. Verfahren nach einem der Ansprüche 6-8, wobei der mindestens eine Sensor (210, 210') ein Signal an eine Mensch-Maschine-Schnittstelle (110) des Ofens sendet, um ein gefährliches Ereignis anzuzeigen.

10. Verfahren nach einem der Ansprüche 6-9, wobei der mindestens eine Sensor (210, 210') ein Signal an ein Flugzeugküchennetzwerk sendet, um vor einem gefährlichen Ereignis zu warnen.

## Revendications

1. Aéronef comprenant :
une cabine ;
une cuisine d'aéronef, la cuisine d'aéronef comprenant un réseau de cuisine d'aéronef ;
un four, ledit four étant situé dans la cuisine d'aéronef, le four comprenant :
une entrée d'air (120) ;
un ventilateur de refroidissement (140) configuré pour aspirer l'air de la cabine à travers ladite entrée d'air (120) pour générer un flux d'air ;
au moins un capteur (210, 210') disposé en aval de l'entrée d'air, ledit au moins un capteur (210, 210') étant configuré pour déterminer une composition gazeuse du flux d'air, ledit au moins un capteur (210, 210') étant configuré pour envoyer un signal au réseau de cuisine d'aéronef afin d'alerter sur un événement dangereux.

2. Aéronef selon une quelconque revendication précédente, dans lequel l'au moins un capteur (210, 210') est configuré pour détecter au moins l'un de l'éthane, de l'isoprène, du 2-méthyl-1,3-butadiène, de l'éthanol, de l'acétone et du monoxyde de carbone.

3. Aéronef selon une quelconque revendication précédente, dans lequel l'au moins un capteur (210, 210') est configuré pour détecter au moins l'une de la pression d'air, d'une température de l'air et d'une humidité de l'air.

4. Aéronef selon une quelconque revendication précédente, dans lequel le four comprend également :
une interface homme-machine (110) ;
dans lequel l'au moins un capteur (210, 210') est configuré pour envoyer un signal à l'interface homme-machine (110) pour afficher un événement dangereux.

5. Aéronef selon une quelconque revendication précédente, dans lequel l'au moins un capteur (210, 210') est situé dans une cavité extérieure du four.

6. Procédé comprenant :
la fourniture d'un four dans un aéronef, l'aéronef comprenant une cabine et une cuisine d'aéronef, la cuisine d'aéronef comprenant un réseau de cuisine d'aéronef et ledit four étant situé dans la cuisine d'aéronef, et le four comprenant :
une entrée d'air (120) ;
un ventilateur de refroidissement (140) configuré pour aspirer l'air de la cabine à travers ladite entrée d'air (120) pour générer un flux d'air ; et
au moins un capteur (210, 210') disposé en aval de l'entrée d'air, et ledit au moins un capteur (210, 210') déterminant une composition gazeuse du flux d'air, l'au moins un capteur (210, 210') étant configuré pour envoyer un signal au réseau de cuisine d'aéronef afin d'alerter sur un événement dangereux.

7. Procédé selon la revendication 6, dans lequel l'au moins un capteur (210, 210') détecte au moins l'un de l'éthane, de l'isoprène, du 2-méthyl-1,3-butadiène, de l'éthanol, de l'acétone et du monoxyde de carbone.

8. Procédé selon les revendications 6 ou 7, dans lequel l'au moins un capteur (210, 210') détecte au moins l'une de la pression d'air, d'une température de l'air et d'une humidité de l'air.

9. Procédé selon l'une quelconque des revendications 6 à 8, dans lequel l'au moins un capteur (210, 210') envoie un signal à une interface homme-machine (110) du four pour afficher un événement dangereux.

10. Procédé selon l'une quelconque des revendications 6 à 9, dans lequel l'au moins un capteur (210, 210') envoie un signal à un réseau de cuisine d'aéronef afin d'alerter sur un événement dangereux.
